# EUROPÄISCHE PATENTANMELDUNG

(11) **EP 0 959 049 A1**
(43) Veröffentlichungstag der Anmeldung: **24.11.1999**
(21) Anmeldenummer: 98109256.2
(22) Anmeldetag: 22.05.1998
(51) Int. Cl.: C03B 5/00, C03B 5/12, C03B 3/02

(54) **Verfahren und Vorrichtung zur thermischen Umsetzung von Reststoffen**

(71) Anmelder: DBI DEUTSCHES BRENNSTOFFINSTITUT ROHSTOFF & ANLAGENTECHNIK GmbH, 09599 Freiberg (DE)
(72) Erfinder: Flick, Thomas, Dipl.-Ing., 09599 Freiberg (DE); Schieber, Andreas, Dipl.-Wirtsch., 73441 Bopfingen (DE); Mottitschka, Wilhelm, Dipl.-Ing., 09599 Freiberg (DE); Escherle, Alfred, Dipl.-Math., 57548 Kirchen/Sieg (DE); Kadlubowski, Wolfgang, Dipl.-Ing., 09599 Freiberg (DE); Seirlehner, Leo P., Dipl-Ing., 4040 Linz/Urfahr (AT); Eidner, Dieter, Dr., 09599 Freiberg (DE)
(74) Vertreter: Lorenz, Werner, Dipl.-Ing.

(57) **Zusammenfassung**

Bei einem Verfahren zur thermischen Umsetzung von brennbaren, energieenthaltenden Reststoffen mit verschiedenen Korngrößen bei Temperaturen oberhalb des Schmelzpunktes von mineralischen Bestandteilen der Reststoffe zur Gewinnung von Feststoffen und Abgasen durch Umsetzung von Reststoffen mit Sauerstoff und/oder Luft bei Normaldruck werden die Reststoffe in einem oberen Bereich eines Hochtemperaturreaktors zusammen mit einem Luft- bzw. Sauerstoffstrom über eine Zufuhreinrichtung zugeführt und zur Reaktion gebracht werden. Die Reststoffe werden in dem Hochtemperaturreaktor zu flüssiger Schlacke und Gas umgesetzt. Die flüssige Schlacke wird in einem im unteren Bereich des Hochtemperaturreaktors sich befindlichen Schmelzbad gestaut. Der Feinkornanteil der Reststoffe wird zu Schlacke und Gas im wesentlichen in einem stehend angeordneten Freiraum des Hochtemperaturreaktors umgesetzt. Der Grobkornanteil der Reststoffe wird im wesentlichen im und auf dem Schmelzbad zu Schlacke und Gas umgesetzt. Die erzeugte flüssige Schlacke fließt unterhalb eines Stauelements durch und wird oberhalb eines Überlaufelements gemeinsam mit dem erzeugten Gas über eine Abflußöffnung des Hochtemperaturreaktors aus demselben abgeführt.

## Beschreibung

Die Erfindung betrifft ein Verfahren zur thermischen Umsetzung von Reststoffen mit verschiedenen Korngrößen nach der im Oberbegriff von Anspruch 1 näher definierten Art. Des weiteren betrifft die Erfindung eine Vorrichtung zur Durchführung des Verfahrens.

Aus der DE 44 39 939 A1 ist ein gattungsgemäßes Verfahren sowie eine Vorrichtung zur Durchführung des beschriebenen Verfahrens bekannt. Dabei findet in einem Schmelzzyklon, welcher über einem Unterofen angeordnet ist, bei Temperaturen oberhalb von 1300 °C eine Vergasung, Verbrennung oder Mineralisierung der Reststoffe statt. Die dabei entstehenden Reaktionsprodukte werden in den Unterofen ausgetragen und es erfolgt eine Trennung der Reaktionsprodukte in eine flüssige Schlacke und in ein Abgas.

Darüber hinaus existieren eine Vielzahl von Verfahren und Vorrichtungen mit dem Ziel der thermischen Umsetzung von Reststoffen mittels Vergasung oder Verbrennung.

Während bei der Verbrennung im wesentlichen nur unbrennbare Gase entstehen, da die oxidierende Atmosphäre das Ziel der vollständigen Verbrennung hat, werden bei der Vergasung infolge der unvollständigen Verbrennung gasförmige, flüssige oder feste Stoffe mit einem Vergasungsmittel, wie z.B. Luft, Wasserdampf, Kohlendioxid, Sauerstoff oder Wasserstoff zu einem brennbaren Gas und einem festen Rückstand, wie Asche oder Schlacke umgesetzt. Mit der unvollständigen Verbrennung liegen reduzierende Bedingungen vor. Für eine ausreichende Reaktion ist sowohl bei der Verbrennung als auch bei der Vergasung eine genügend hohe Reaktionstemperatur nötig, weshalb alle Verfahren bei Temperaturen größer 900 °C arbeiten. Ein erhöhter Druck kann zusätzlich die Reaktionsbedingungen verbessern.

Für die sichere Entsorgung oder Verwertung von kohlenstoffhaltigen Reststoffen wurden und werden die allgemein bekannten Verfahren und Vorrichtungen der Vergasung, wie der Drehrostgenerator, die Wirbelschichtvergasung oder die Vergasung in der Flugstaubwolke, modifiziert und genutzt.

Hinzu kommen Verfahren und Vorrichtungen aus der Nichteisenindustrie und Metallurgie, wie der Schmelzzyklon und das Schmelzbad, welche durch den Einsatz von Reststoffen Brennstoff einsparen bzw. ersetzen und gleichzeitig die sichere Entsorgung oder Verwertung dieser Reststoffe gewährleisten. Die Verbrennung und Vergasung spielen in diesen Prozessen ebenfalls eine große Rolle.

Insbesondere der Einsatz von festen Reststoffen in der Wirbelschicht, der Flugstaubwolke (u.a. DD 267 880) und dem Schmelzzyklon - u.a. die oben angeführte DE 44 39 939 sowie die DE 35 25 817 und die DE 41 23 740 - erfordern einen hohen Aufbereitungsaufwand, da dort die Korngröße und Feuchte starken Einschränkungen für die Nutzung unterworfen sind. Für die Korngrößen liegen dabei die oberen Grenzen in einem Bereich zwischen 0,1 bis 5 mm und die Feuchtigkeit sollte maximal bis zu 10 Masseprozent betragen.

Im Gegensatz dazu ist insbesondere das Schmelzbad - u.a. bekannt aus der DE 35 42 805 und der DE 39 20 760 - im wesentlichen unabhängig von Korngröße und Feuchte. Nachteile ergeben sich jedoch durch die Trägheit der Reaktion eines derartigen Systems. Mit viel Aufwand und geringem Erfolg wird versucht, dem Schmelzbad eine Umwälzung bzw. Bewegung der Schmelze aufzuzwingen. Des weiteren ist man um eine große Verweilzeit bemüht, was zu einer großen Bauart der zugehörigen Vorrichtungen führt. Schließlich bringt auch der manuell aufwendige Abzug der flüssigen und heißen Schlacke über die Auslaßöffnungen solcher Schmelzbäder Nachteile mit sich, welcher erst bei sehr hohen Durchsätzen von mehr als 10 t/h maschinell im Dauerbetrieb realisiert werden kann.

Der vorliegenden Erfindung liegt daher die Aufgabe zugrunde, ein Verfahren und eine Vorrichtung zu schaffen, mit welcher Reststoffe einer möglichst großen Körnungsbandbreite und Feuchte flexibel und wirtschaftlich in einen inerten, glasartigen, umweltneutralen Feststoff sowie in Abgase umgewandelt werden können. Verfahren und Vorrichtung sollen dabei kontinuierlich betrieben werden und eine möglichst kleine Bauart zulassen.

Erfindungsgemäß wird diese Aufgabe durch die im kennzeichnenden Teil von Anspruch 1 genannten Verfahrensschritte sowie durch die in Anspruch 14 genannten Vorrichtungsmerkmale gelöst.

Der im oberen Bereich des Hochtemperaturreaktors zugeführte Reststoff mit einer maximalen Körnung von 15 bis 20 mm gelangt über die Zufuhreinrichtung mit einem Vergasungsmittel bzw. Oxidationsmittel, günstigerweise Sauerstoff in den Reaktor. Das Vergasungsmittel bzw. Oxidationsmittel beschleunigt dabei den Reststoff. Am Austritt der Zufuhreinrichtung wird die Gas/Reststoff-Suspension gezündet. Der feinkörnige Reststoffanteil, ca. in einem Bereich von < 0,5 mm, wird zur Reaktion unter reduzierenden bzw. oxidierenden Bedingungen gebracht. Die dabei gebildete Schlacke und der nicht umgesetzte, meist grobkörnige Reststoffanteil fällt, je nach Dichte, auf bzw. in das sich im unteren Bereich des Hochtemperaturreaktors befindliche Schmelzbad. Dort erfolgt vorteilhafterweise die weitere Vergasungs- bzw. Verbrennungsreaktion bis zum vollständigen Umsatz der eingebrachten Reststoffe in eine flüssige, inerte Schlacke und ein Abgas.

Der aus dem Unterteil des Reaktors herausgezogene Gas- und Schlackeabfluß erfolgt erfindungsgemäß derart, daß ein Stein die Schlacke zurückhält bzw. staut, weshalb dieser Stein hier Staustein genannt wird. Somit kann vorteilhafterweise nur am Boden vollständig umgesetztes Material den Reaktor verlassen. Der dahinter befindliche Stein erzeugt die gewünschte Schlackenbadhöhe als Überlauf, wird hier Überlaufstein genannt und ist gleichzeitig als Abrißkante des Schlackenflusses ausgebildet.

Mit Hilfe der erfindungsgemäßen Vorrichtung können die oben genannten Vorteile des erfindungsgemäßen Verfahrens in idealer Weise ausgenutzt werden.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.

Es zeigt:
- Fig. 1: eine erste Ausführungsform der erfindungsgemäßen Vorrichtung zur Durchführung des erfindungsgemäßen Verfahrens;
- Fig. 2: drei Schnittansichten nach der Linie II-II aus Fig. 1 mit verschiedenen Ausführungsformen einer sich über dem Schmelzbad befindlichen Brennereinrichtung; und
- Fig. 3: eine zweite Ausführungsform der erfindungsgemäßen Vorrichtung zur Durchführung des erfindungsgemäßen Verfahrens.

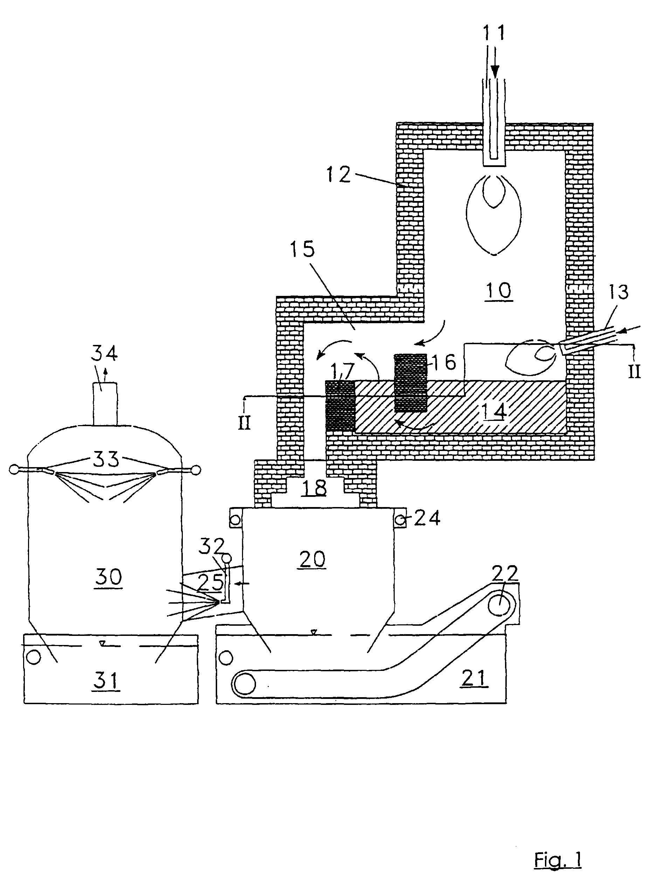

Gemäß Fig. 1 ist ein Hochtemperaturreaktor 10 oberhalb eines Zwischenraumes 20 dargestellt, welcher wiederum neben einer Quencheinrichtung bzw. Quenchreaktor 30 angeordnet ist.

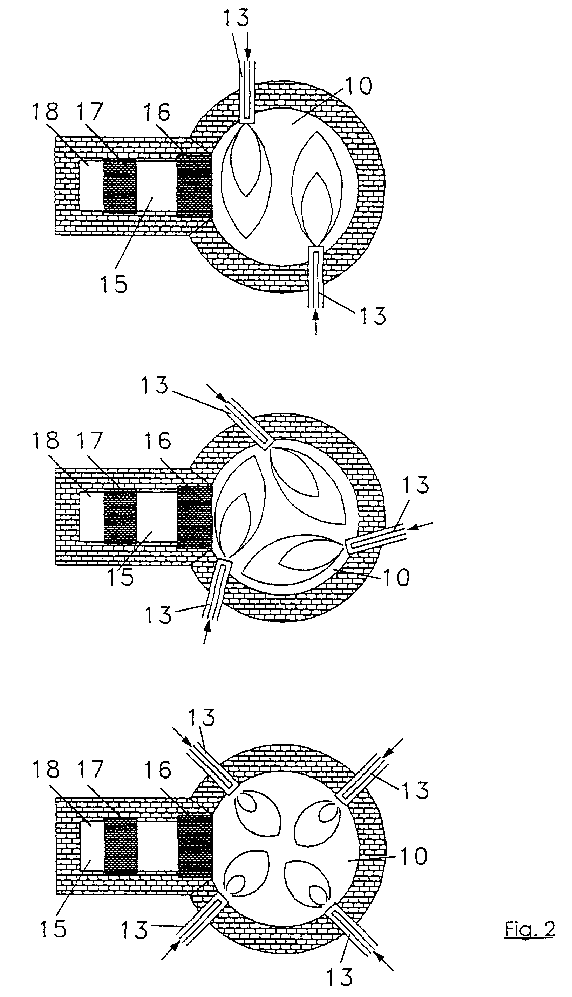

Der Hochtemperaturreaktor 10 ist als gerader, stehender Zylinder aufgebaut, wobei seine Wandungen sich, anders als vorliegend dargestellt, auch nach oben oder unten verjüngen können. Der Hochtemperaturreaktor 10 ist im vorliegenden Fall ausgemauert, er kann jedoch auch ganz oder teilweise mit einem Kühlmantel zum Schutz der Ausmauerung vor thermischer Überlastung ausgerüstet sein, und weist eine Zufuhreinrichtung 11 für den Feststoff, ein, wie bereits oben erwähnt, ausgemauertes Gehäuse 12, einen ausgemauerten, zu einer Seite des Hochtemperaturreaktors 10 herausgezogenen Syphonteil 15, eine bzw. mehrere Brennereinrichtungen 13, deren Funktion später noch näher erläutert wird, sowie in seinem unteren Bereich ein Schmelzbad 14 mit einem als Staustein 16 ausgebildeten Stauelement und einem als Überlaufstein 17 ausgebildeten Überlaufelement auf. Der Staustein 16 und der Überlaufstein 17 sind dabei, wie in Fig. 2 erkennbar, im Syphonteil 15 des Hochtemperaturreaktors 10 angeordnet.

Über die Zufuhreinrichtung 11, welche in nicht dargestellter Weise eine Dosiervorrichtung und eine Brennereinrichtung aufweist, welche wiederum mit einem Feststoffbrenner, einem Gas- oder Flüssigkeitszusatzbrenner sowie einer Zünd- und Überwachungseinrichtung versehen ist, werden dem Hochtemperaturreaktor 10 nicht dargestellte Reststoffe, deren Partikelgröße kleiner als 20 mm, günstigerweise kleiner als 15 mm ist, zugeführt. Eine notwendige Zerkleinerung der Reststoffe auf die angegebene Partikelgröße vor der Zufuhr in den Hochtemperaturreaktor 10 erfolgt dabei in nicht dargestellten Einrichtungen bekannter Bauart.

In dem Hochtemperaturreaktor 10 wird der Reststoff mit ebenfalls über die Zufuhreinrichtung 11 zugeführter Luft oder Sauerstoff sowie einem brennbaren Gas, wie z.B. Erdgas, bei 1200 bis 2000 °C, umgesetzt, wobei es sich bei dem Reststoff um einen an sich brennbaren, energieenthaltenden Stoff handelt. Erdgas wird lediglich zugeführt, um den Reaktor 10 im Aufheizbetrieb auf die nötige Betriebstemperatur > 1000 °C aufzuwärmen, eine Zündung des Feststoffes auszulösen und die notwendige Verbrennungstemperatur zu erhalten. An Stelle des brennbaren Gases, wie z.B. Erdgas, kann ebenso ein flüssiger Brennstoff wie Öl treten.

In einem ersten Teil der Reaktion wird Material sehr kleiner Partikelgröße bereits im Flug vom oberen Bereich des Hochtemperaturreaktors 10 zum Schmelzbad 14 mit dem angebotenen Luftsauerstoff bzw. Sauerstoff und einem Brennstoff, z.B. Erdgas oder Öl, in Abhängigkeit der angebotenen Sauerstoffmenge reduzierend bzw. oxidierend reagieren. Die Reaktion verläuft bei reduzierender Fahrweise als Vergasung und bei oxidierender Fahrweise als Verbrennung der Reststoffe. Dabei entstehen aus den Reststoffen die Reaktionsprodukte Gas und flüssige Schlacke.

Bis zu welcher Partikelgröße sich bereits hier ein vollständiger Umsatz des Einsatzstoffes vollzieht, ist wesentlich abhängig von der Verweilzeit der Partikel im Flug und demzufolge der Größe des Hochtemperaturreaktors 10. Bei einem ca. 3 m hohen Hochtemperaturreaktor 10 erfolgt ein vollständiger Umsatz bis zu einer Partikelgröße von etwa 0,25 mm.

Restlicher, nicht umgesetzter Feststoff und bereits erzeugte Schlacke bilden das Schmelzbad 14, welches je nach Durchsatzmenge des Gesamtreaktors einige Zentimeter bis etwa 0,5 m hoch ist. Je nach Masse und Partikelgröße sinkt ein Teil des noch nicht umgesetzten Feststoffes in das Schmelzbad 14 und wird dort eingeschmolzen. Der aufschwimmende Teil reagiert mit der Schmelze und der umliegenden Gasatmosphäre reduzierend bzw. oxidierend und schmilzt ebenfalls auf.

Zur Unterstützung und Beschleunigung dieser Reaktionen werden im Bedarfsfall ein bzw. mehrere der über dem Schmelzbad 14 sich befindlichen Brennereinrichtungen 13 genutzt. Als Brennstoff findet analog zur Zufuhreinrichtung 11 Luftsauerstoff bzw. Sauerstoff und ein Brennstoff, z.B. Erdgas oder Öl Verwendung. Wie in Fig. 2 dargestellt, sind die Brennereinrichtungen 13 dabei günstigerweise zwischen 5 und 40° leicht gegen die Oberfläche des Schmelzbades 14 geneigt, überstreichen die gesamte Schmelzbadoberfläche und verbessern den Stoffübergang an den Reaktionsflächen der Reststoffe durch die Einbringung eines Impulses und eines gewissen Wärmeeintrags in diesen Bereich. Zusätzlich werden die Brennereinrichtungen 13 genutzt, wenn kein Masseeintrag erfolgt und ein Einfrieren bzw. Erstarren der Schlacke verhindert werden soll. Unterstützend kann in nicht dargestellter Art und Weise eine elektrische Beheizung in dem Schmelzbad 14 oder in dem ausgemauerten Gehäuse 12 eingesetzt werden.

Die Brennereinrichtungen 13 bieten zusätzlich Vergasungsmittel bzw. Oxidationsmittel an, erzeugen eine Bewegung des Bades und zwingen nicht umgesetztes, insbesondere grobes Material zur Zündung und Aufschmelzung durch Einbringung zusätzlicher Verbrennungswärme.

Neben den Brennereinrichtungen 13 ist in nicht dargestellter Art und Weise weiterhin möglich, Gase und/oder Feststoff in Form gebündelter Strahlen mit hoher kinetischer Energie mittels Aufblaslanzen aufzublasen. Das Gas kann dabei mit Sauerstoff und/oder Luft gemischt werden, es können Reduktionsgase, ebenso neutrale Gase und/oder Oxidationsgase aufgeblasen werden. Der Feststoff kann aus Einsatzmaterial, zusätzlichem Brennstoff aber auch Schlackenbildner bzw. Flußmittel zur Verbesserung der Fließeigenschaften bestehen.

Eine weitere Möglichkeit der Verbesserung der Schmelz- und Reduktionsarbeit können nicht dargestellte Einrichtungen sein, welche unterhalb der Oberfläche des Schmelzbades 14 bzw. vom Boden aus Feststoff und/oder Gas in das Bad einbringen. Vorrangiges Ziel ist hierbei immer die Nachbehandlung der flüssigen Schmelze.

Um zu verhindern, daß der aufschwimmende, noch nicht umgesetzte Reststoff den Hochtemperaturreaktor 10 über den herausgezogenen Syphonteil 15 seitlich verläßt, befindet sich in Höhe der Badoberfläche der Staustein 16. Der so gebildete Syphonteil 15 garantiert, daß nur flüssige und vollständig umgesetzte Schlacke unter dem Staustein 16 den Reaktor 10 verlassen kann. Die Höhe des Schmelzbades 14 wird eingestellt über die Höhe des Überlaufsteines 17.

Das heiße Gas wird aus dem Reaktorteil in den herausgezogenen Teil um mehr als 90 °C umgelenkt, strömt an der Oberfläche der abfließenden Schlacke vorbei und verhindert ein Erstarren derselben.

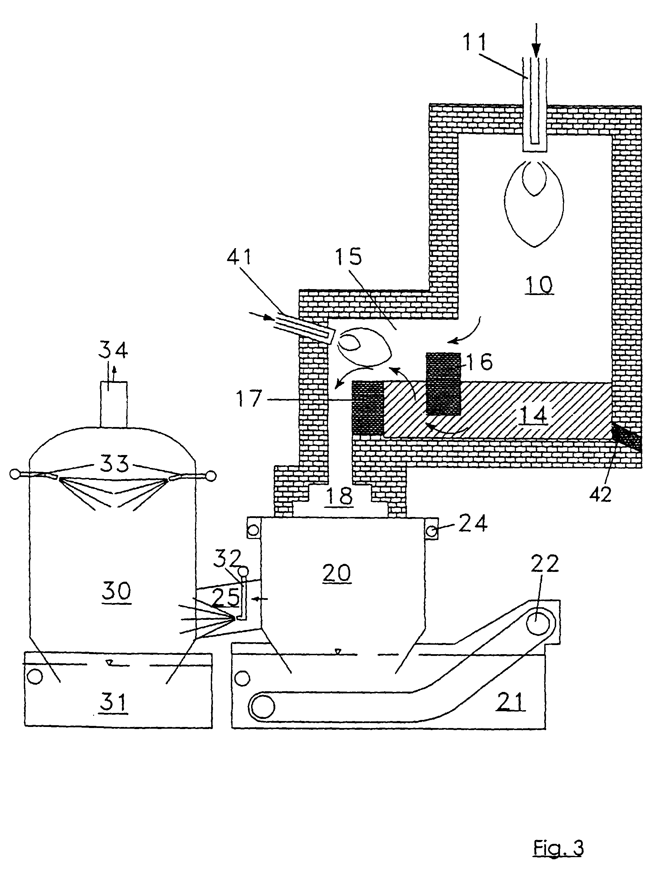

Bei großer Bauart des Hochtemperaturreaktors 10 und bei geringem Umsatz innerhalb desselben und demzufolge geringem Schlackenfluß ist unter Umständen ein Erstarren der abfließenden Schlacke im Bereich des Syphonteils 15 mit Staustein 16 und Überlaufstein 17 möglich. Um dies zu verhindern, wird eine weitere Brennereinrichtung 41, wie in Fig. 3 dargestellt, eingesetzt. Als Brennstoff für die Brennereinrichtung 41 dient ebenfalls Luftsauerstoff bzw. Sauerstoff und ein Brennstoff z.B. Erdgas oder Öl.

Für eine Entleerung des Schlackebades 14 und bei Beseitigung einer sich gebildeten schweren Schicht, z.B. Eisenstein, ist des weiteren eine ebenfalls in Fig. 3 dargestellte Abstichöffnung 42 vorgesehen.

Der Gas- und Schlackeabgang erfolgt nach unten über eine im unteren Bereich des Syphonteils 15 angeordnete Abflußöffnung 18 in einen Zwischenraum 20, wobei die Abflußöffnung 18 konisch ausgeführt ist.

An der Innenseite des nicht ausgemauerten Zwischenraumes 20 befinden sich an einer Wandung Berieselungseinrichtungen 24, welche in an sich bekannter Weise, z.B. als Überlauf oder Wasserdüsen, ausgeführt sind und die Wandung über ihren gesamten Umfang mit Wasser besprühen. Dadurch wird die Wandung des Zwischenraumes 20 vor Überhitzung geschützt und es werden eventuell an die Wandung gelangende Schlacketeilchen abgespült.

Andere Ausführungsformen sind möglich, wenn sie den Schutz des Zwischenraumes 20 vor erstarrender Schlacke und thermischer Überlastung sichern können. So sind z.B. Ausführungen mit Doppelmantelkühlung oder außen angebrachter Berieselung denkbar.

Die flüssige Schlacke fällt durch den Zwischenraum 20 in ein unterhalb desselben sich befindliches Wasserbad 21, welches den Zwischenraum 20 nach außen gasdicht abschließt. Die flüssige Schlacke wird dort abgekühlt, granuliert, sedimentiert und über eine Austragseinrichtung 22, z.B. einer Kratzerkette, zu einer nicht dargestellten Weiterverarbeitung befördert. Die Abkühlung der flüssigen Schlacke in dem Wasserbad stellt eine sehr einfache und sichere Methode dar, um einen inerten, glasartigen, umweltneutralen sowie laugungsresistenten Feststoff als aus der Schlacke hergestelltes Endprodukt zu erhalten, welches in der Bau- und Keramikindustrie einsetzbar ist.

Das Gas und der durch die Berieselungseinrichtung 24 gebildete Wasserdampf strömen im wesentlichen ungekühlt durch den Zwischenraum 20 in eine seitlich angeordnete, leicht abwärts gerichtete Leitung 25 und von dort in eine sogenannte Quencheinrichtung 30. Bereits am Eintritt in die Leitung 25 befinden sich eine oder mehrere Druckzerstäubungsdüsen 32, welche das Gas in einer ersten Stufe quenchen und die Leitung 25 vor Überhitzung schützen. Dabei versteht man unter Quenchen eine Abkühlung mit einer sehr hohen Temperaturdifferenz innerhalb einer sehr kurzen Zeit.

Auch für die Leitung 25 sind andere Ausführungsformen möglich, wenn sie den Schutz der Leitung 25 vor thermischer Überlastung sichern, z.B. als Doppelmantelkühlung, Ausmauerung oder außen angebrachte Berieselung. Die Leitung 25 sollte dabei in jedem Fall eine möglichst große lichte Weite aufweisen.

Wird der Zwischenraum 20 und/oder die Leitung 25 mit einer Doppelmantelkühlung versehen, so weisen diese Teile Kühlwasserzu- und ableitungen auf und können in einen nicht dargestellten Kühlkreislauf der Brennereinrichtungen 11, 13 und 41 integriert sein.

In der Quencheinrichtung 30 sind Druckzerstäubungsdüsen 33 über den gesamten Umfang, eventuell in mehreren Ebenen angeordnet. Je nach Größe der Quencheinrichtung 30 ist selbstverständlich auch eine andere Anordnung der Druckzerstäubungsdüsen 33 als abgebildet denkbar. Durch die Wasserstrahlen, die von Druckzerstäubungsdüsen 32 ausgehen, wird das Gas auf seinen Wasserdampftaupunkt abgekühlt. Eine Quenchwassertasse 31 schließt die Quencheinrichtung 30 an ihrer Unterseite gasdicht ab.

Die Abkühlung des Gases durch die Quenchwassereinspritzung in der Quencheinrichtung 30 ermöglicht eine sehr rasche, jedoch gleichzeitig sehr einfache und ohne großen Aufwand durchführbare Abkühlung des Gases.

Das Wasser des Wasserbades 21 wird zweckmäßigerweise mittels natürlichem Überlauf mit dem Wasser der Quenchwassertasse 31 zusammengeführt und im Kreislauf betrieben, wobei eine Reinigung, sowie gegebenenfalls eine Neutralisierung und eine Wärmeauskopplung erforderlich sind. Die Zusammenführung des Wasserbades 21 und der Quenchwassertasse 31 ist in den Figuren nicht dargestellt sie kann jedoch sehr einfach durch einen etwas höheren Wasserstand des Wasserbades 21 gegenüber der Quenchwassertasse 31 erzeugt werden. Durch die Reinigung werden die in das Wasser der Quenchwassertasse 31 überführten Schwermetalle und Halogene entfernt und können als Staub bzw. Salz einer getrennten Entsorgung zugeführt werden.

Das wie oben beschrieben gekühlte Gas verläßt die Quencheinrichtung 30 über eine Leitung 34 an ihrer Oberseite und kann einer Staubaushaltung, wie z.B. einem Staubzyklon und/oder einer nicht dargestellten, nachgeschalteten, energetischen Nutzung zugeführt werden, wenn das im Hochtemperaturreaktor 10 entstehende Gas bei reduzierendem Betrieb ein brennbares Gas ist. Unter oxidierendem Betrieb ist eine entsprechende Rauchgasabführung erforderlich.

Alternativ kann die Gaskühlung auch durch nicht dargestellte Verdampfungskühler üblicher Bauart mit Zweistoffdüsen realisiert werden. Dabei wird eine definierte Wassermenge eingedüst, die vollständig verdampfende Wassermenge nimmt die Wärme auf und kühlt das Gas ab. Nachgeschaltet ist eine Staubaushaltung üblicher Bauart, z.B. als Staubfilter.

Eine weitere, nicht dargestellte Möglichkeit ist die gemeinsame Durchführung der Gaskühlung und Schlackeerstarrung des Verfahrens in einem gemeinsamen Zwischenraum 20. In diesem Fall werden die flüssige Schlacke und das Gas, welche aus der Ausflußöffnung 18 austreten, mittels in dem Zwischenraum 20 angeordneten Druckzerstäubungsdüsen direkt nach dem Austreten stark abgekühlt, was als Direktquenchung bezeichnet werden kann. Unterhalb des Zwischenraums 20 befindet sich ebenfalls ein Wasserbad 21 mit einer Austragseinrichtung 22 zur Abkühlung, Granulierung, Sedimentation sowie dem Austrag der Schlacke. Der Gasaustritt aus dem Zwischenraum 20 kann seitlich erfolgen. Das Wasser in dem Wasserbad 21 wird auch hier im Kreislauf geführt und in einer Wasseraufbereitung einer Reinigung, sowie gegebenenfalls einer Neutralisierung sowie einer Wärmekopplung unterworfen. Wiederum ist dabei die in dem Kreislauf enthaltene Wassermenge so groß, daß in dem Quenchraum bzw. Zwischenraum 20 lediglich eine partielle Verdampfung auftritt.

Diese Direktquenchung stellt eine vereinfachte Möglichkeit zur schnellen Abkühlung des Gases dar, wobei in diesem Fall auch die flüssige Schlacke durch die Quenchwassereinspritzung gekühlt wird, was eine Verkürzung des Verfahrens mit sich bringt.

## Patentansprüche

1. Verfahren zur thermischen Umsetzung von brennbaren, energieenthaltenden Reststoffen mit verschiedenen Korngrößen bei Temperaturen oberhalb des Schmelzpunktes von mineralischen Bestandteilen der Reststoffe zur Gewinnung von Feststoffen und Abgasen durch Umsetzung von Reststoffen mit Sauerstoff und/oder Luft bei Normaldruck,
**dadurch gekennzeichnet,** daß
1.1 die Reststoffe in einem oberen Bereich eines Hochtemperaturreaktors (10) zusammen mit einem Luft- bzw. Sauerstoffstrom über eine Zufuhreinrichtung (11) zugeführt und zur Reaktion gebracht werden,
1.2 die Reststoffe in dem Hochtemperaturreaktor (10) zu flüssiger Schlacke und Gas umgesetzt werden,
1.3 die flüssige Schlacke in einem im unteren Bereich des Hochtemperaturreaktors sich befindlichen Schmelzbad (14) gestaut wird,
1.4 der Feinkornanteil der Reststoffe zu Schlacke und Gas im wesentlichen in einem stehend angeordneten Freiraum des Hochtemperaturreaktors (10) umgesetzt wird,
1.5 der Grobkornanteil der Reststoffe im wesentlichen im und auf dem Schmelzbad (14) zu Schlacke und Gas umgesetzt wird,
1.6 die erzeugte flüssige Schlacke unterhalb eines Stauelements (16) durchfließt und oberhalb eines Überlaufelements (17) gemeinsam mit dem erzeugten Gas über eine Abflußöffnung (18) des Hochtemperaturreaktors (10) aus demselben abgeführt wird.

2. Verfahren nach Anspruch 1,
**dadurch gekennzeichnet,** daß
das Gas und die flüssige Schlacke gemeinsam einem Zwischenraum (20) zugeführt werden und die flüssige Schlacke in einem sich unterhalb des Zwischenraums befindlichen Wasserbad (21) abgekühlt und granuliert wird.

3. Verfahren nach Anspruch 1 oder 2,
**dadurch gekennzeichnet,** daß
das Gas durch eine Quenchwassereinspritzung stark abgekühlt wird.

4. Verfahren nach einem der Ansprüche 1, 2 oder 3,
**dadurch gekennzeichnet,** daß
zur Umsetzung des Grobkornantelis der Reststoffe dem Hochtemperaturreaktor (10) im Bereich des Schmelzbads (14) oberhalb der Schmelzbadoberfläche zusätzlich Gase zugeführt werden, welche zu Teilen Luft und/oder Sauerstoff enthalten.

5. Verfahren nach einem der Ansprüche 1 bis 4,
**dadurch gekennzeichnet,** daß
zur Nachbehandlung der Schmelze in das Schmelzbad (14) unterhalb der Schmelzbadoberfläche Gase mit hoher kinetischer Energie zugeführt wird, welche zu Teilen Luft und/oder Sauerstoff enthalten.

6. Verfahren nach einem der Ansprüche 1 bis 5,
**dadurch gekennzeichnet,** daß
die thermische Umsetzung der Reststoffe in Gas und flüssige Schlacke in einem Temperaturbereich von 1000 bis 1800 °C erfolgt.

7. Verfahren nach einem der Ansprüche 1 bis 6,
**dadurch gekennzeichnet,** daß
die Reststoffe mit einem Heizwert von >3000 kJ/kg mit Sauerstoff und/oder Luft zur Erzeugung der notwendigen Reaktions- und Umsetzungstemperatur teilweise bis vollständig verbrannt werden, wobei bei reduzierender Fahrweise ein brennbares, energetisch nutzbares Gas sowie bei oxidierender Fahrweise ein nicht brennbares Rauchgas entsteht.

8. Verfahren nach einem der Ansprüche 1 bis 7,
**dadurch gekennzeichnet,** daß
bei zu niedrigem Heizwert der Reststoffe dem Hochtemperaturreaktor (10) Zusatzenergie in Form von brennbaren Gasen oder brennbaren Flüssigkeit zugeführt wird.

9. Verfahren nach Anspruch 8,
**dadurch gekennzeichnet,** daß
als Zusatzenergie ein heizwertreiches Gas, eine heizwertreiche Flüssigkeit oder ein brennbares, energieenthaltendes Pyrolyseprodukt verwendet wird.

10. Verfahren nach einem der Ansprüche 1 bis 9,
**dadurch gekennzeichnet,** daß
zur Nachbehandlung und zur Verbesserung der Fließeigenschaften der Schmelze Feststoff in Form von Schlackenbildner bzw. Flußmittel zugeführt wird.

11. Vorrichtung zur Durchführung des Verfahrens nach einem oder mehreren der Ansprüche 1 bis 10, mit einem Hochtemperaturreaktor (10), welcher eine Zufuhreinrichtung (11) für die Reststoffe aufweist, und innerhalb welchem sich ein Schmelzbad (14) befindet, welches an einer Seite durch ein Überlaufelement (17) begrenzt ist, und in welchem ein Stauelement (16) angeordnet ist.

12. Vorrichtung nach Anspruch 11,
**dadurch gekennzeichnet,** daß
der Hochtemperaturreaktor (10) im wesentlichen als länglicher stehender Zylinder mit einem seitlichen Syphonteil (15) ausgebildet ist, wobei an der Unterseite des Syphonteils (15) eine Abflußöffnung (18) für den gemeinsamen Abfluß von Gas und Schlacke vorgesehen ist.

13. Vorrichtung nach Anspruch 11 oder 12,
**dadurch gekennzeichnet,** daß
das Überlaufelement als in dem Syphonteil (15) angeordneter Überlaufstein (17) ausgebildet ist, und daß das Stauelement als zwischen dem Syphonteil (15) und dem zylindrischen Teil des Hochtemperaturreaktors (10) angeordneter Staustein (16) ausgebildet ist.

14. Vorrichtung nach einem der Ansprüche 11 bis 13,
**dadurch gekennzeichnet,** daß
die Zufuhreinrichtung (11) eine Dosiervorrichtung und eine Brennereinrichtung aufweist, welche mit einem Feststoffbrenner, einem Gas- oder Flüssigkeitszusatzbrenner sowie einer Zünd- und Überwachungseinrichtung versehen ist.

15. Vorrichtung nach einem der Ansprüche 11 bis 14,
**dadurch gekennzeichnet,** daß
zur Unterstützung der Reaktion in dem Hochtemperaturreaktor (10) wenigstens eine weitere Brennereinrichtung (13) vorgesehen ist, welche gegen die Oberfläche des Schmelzbades (14) geneigt ist.

16. Vorrichtung nach einem der Ansprüche 11 bis 15,
**dadurch gekennzeichnet,** daß
in dem Hochtemperaturreaktor (10) Aufblaslanzen vorgesehen sind, durch welche Gase und/oder Feststoffe auf das Schmelzbad (14) aufblasbar sind.

17. Vorrichtung nach einem der Ansprüche 11 bis 16,
**dadurch gekennzeichnet,** daß
unterhalb des Schmelzbades (14) Einrichtungen vorgesehen sind, durch welche Gase und/oder Feststoffe in das Schmelzbad (14) einbringbar sind.

18. Vorrichtung nach einem der Ansprüche 11 bis 17,
**dadurch gekennzeichnet,** daß
in dem Hochtemperaturreaktor (10) in dem Bereich des Syphonteils (15) wenigstens eine auf das Schmelzbad (14) gerichtete Brennereinrichtung (41) vorgesehen ist.

19. Vorrichtung nach einem der Ansprüche 11 bis 18,
**dadurch gekennzeichnet,** daß
unterhalb des Schmelzbades (14) wenigstens eine Abstichöffnung (42) in dem Hochtemperaturreaktor (10) vorgesehen ist.

20. Vorrichtung nach einem der Ansprüche 11 bis 19,
**dadurch gekennzeichnet,** daß
unterhalb des Hochtemperaturreaktors (10) ein Zwischenraum (20) angeordnet ist, welcher an seiner Seitenwand mit Berieselungseinrichtung (24) und an seiner Unterseite einem Wasserbad (21) versehen ist.

21. Vorrichtung nach Anspruch 20,
**dadurch gekennzeichnet,** daß
der Zwischenraum (20) über eine Leitung (25) mit einer Quencheinrichtung (30) verbunden ist, welche an ihrer Seitenwand Druckzerstäubungsdüsen (33) sowie an ihrer Unterseite eine Quenchwassertasse (31) aufweist.
